# EUROPÄISCHE PATENTSCHRIFT

(11) **EP 3 066 255 B1**
(45) Veröffentlichungstag und Bekanntmachung des Hinweises auf die Patenterteilung: **06.06.2018**
(21) Anmeldenummer: 14793163.8
(22) Anmeldetag: 04.11.2014
(51) Int. Cl.: D06M 15/273, D06M 15/356, D04H 1/587, D04H 1/64

(54) **VERWENDUNG VON BINDEMITTEL-ZUSAMMENSETZUNGEN ZUR HERSTELLUNG VON TEXTILEN FLÄCHENGEBILDEN**
USE OF BINDER COMPOSITIONS FOR PRODUCING TEXTILE SHEET PRODUCTS
UTILISATION DE COMPOSITIONS DE LIANT POUR LA FABRICATION DE STRUCTURES TEXTILES

(30) Priorität: 08.11.2013 DE 102013222770
(43) Veröffentlichungstag der Anmeldung: 14.09.2016
(73) Patentinhaber: Wacker Chemie AG, 81737 München (DE)
(72) Erfinder: BAUERS, Florian, 84489 Burghausen (DE)
(74) Vertreter: Ege, Markus
(86) Internationale Anmeldenummer: PCT/EP2014/073744
(87) Internationale Veröffentlichungsnummer: WO 2015/067621

(56) Entgegenhaltungen:
- EP-A2- 1 336 623
- WO-A1-2004/065437
- WO-A1-2011/131279
- JP-A- 2007 247 111
- DATABASE WPI Week 197552 Thomson Scientific, London, GB; AN 1975-85303W XP002735051, -& JP S50 60570 A (KANEBO LTD) 24. Mai 1975 (1975-05-24)

## Beschreibung

Die Erfindung betrifft die Verwendung von Bindemittel-Zusammensetzungen zur Herstellung von textilen Flächengebilden, wie beispielsweise Vliesstoffen, insbesondere Tissues, Filzen, Watten oder grobmaschigen, lockeren Geweben, Gestricken oder Gewirken.

Bindemittel-Zusammensetzungen für textile Flächengebilde enthalten als Bindemittel-Komponente im Allgemeinen Polymerisate auf Basis ethylenisch ungesättigter Monomere und liegen zumeist in wässriger Form vor. Die Polymerisate enthalten üblicherweise Einheiten von vernetzenden Monomeren und können deswegen untereinander und gegebenenfalls auch mit Fasern vernetzen und damit zur Bildung von textilen Flächengebilden mit höherer Festigkeit beitragen. Dadurch kann eine dauerhafte Fixierung der Fasern sowie eine Erhöhung der Widerstandsfähigkeit der textilen Flächengebilde gegenüber mechanischer Belastung erreicht werden, auch bei Kontakt mit Flüssigkeiten. Textile Flächengebilde sind auch bekannt unter dem Begriff Nonwovens und können beispielsweise nach dem Airlay-, Wetlay- oder Spunlay-Verfahren hergestellt werden.

In der industriellen Praxis haben sich bisher vorwiegend N-Methylolacrylamid (NMA) Einheiten enthaltende Polymerisate als Bindemittel-Komponente durchgesetzt, wie beispielsweise in der US 4449978 beschrieben. Nachteiligerweise wird im Zuge der Vernetzung derartiger Polymerisate Formaldehyd gebildet, was aus toxikologischen Gründen verpönt ist. Zusätzlich enthalten solche Polymerisate in Folge ihrer Herstellung in vielen Fällen schon als Begleitstoff Formaldehyd, beispielsweise auf Grund ihrer Herstellung mittels Polymerisation unter Einsatz von Formaldehyd freisetzenden Initiatoren, wie Natriumformaldehydsulfoxylat (SFS). Formaldehyd kann aber auch durch Zusatz bestimmter Stabilisatoren eingebracht werden.

Es besteht also Bedarf, den Formaldehyd-Gehalt in den Bindemittel-Zusammensetzungen zu minimieren und möglichst Formaldehyd-freie textile Flächengebilde auf effiziente Weise zugänglich zu machen. Hierzu wurden in der WO2013/072713 Mischungen aus Carbonsäure(anhydrid) modifizierten Polymeren als Bindemittel vorgeschlagen. Die WO2009/024216 empfiehlt Copolymerisate, die spezielle Sulfonsäure-Monomer-Einheiten enthalten, als Bindemittel für unterschiedliche Anwendungen. Die WO2004/ 065437 befasst sich mit Silikon-modifizierten Polymerisaten. Als Bindemittel-Komponente wurden auch Styrol-Butylacrylat-Polymerisate vorgeschlagen, die beispielsweise durch Einpolymerisieren von Acrylamid, (Meth)acrylsäure oder Hydroxyethylacrylat funktionalisiert waren, wie beispielsweise Primal™ NW-1845K. Die EP2199332 beschreibt Bindemittel-Zusammensetzungen, die Carboxyl-funktionalisierte Styrol-Acrylat-Mischpolymerisate und Polysaccharide, Proteine oder Lignin(sulfonate) enthalten. Damit erhaltene textile Flächengebilde haben allerdings niedrige Benetzungsgeschwindigkeiten, geringe Wasseraufnahmekapazitäten oder lange Tropfeneinsinkzeiten. Zudem erfordert die Trocknung bzw. Härtung von Styrol-Butylacrylat-Polymerisaten enthaltenden Bindemittel-Zusammensetzungen höhere Temperaturen bei der Herstellung von textilen Flächengebilden und ist somit energieintensiver.

Die WO2007/120341 und die WO99/52961 empfehlen den Einsatz von maskierten Polyisocyanaten als Bindemittel für Nonwovens. Für die Härtung der Nonwovens werden die Isocyanate demaskiert und dabei die Maskierungsgruppen abgespalten und somit Beiprodukte erzeugt, was beispielsweise mit unerwünschter Geruchsbelästigung verbunden sein kann.

Zudem führen bisher bekannte Bindemittel-Zusammensetzungen, die ohne Formaldehyd-freisetzende Polymere auskommen, häufig zu textilen Flächengebilden mit unzureichender Festigkeit, insbesondere unzureichender Nasszugfestigkeit.

Vor diesem Hintergrund bestand die Aufgabe, Bindemittel-Zusammensetzungen zur Herstellung von textilen Flächengebilden zur Verfügung zu stellen, mit denen ein oder mehrere der oben genannten Nachteile des Stand der Technik reduziert oder gar vermieden werden können.

Gegenstand der Erfindung ist die Verwendung von Bindemittel-Zusammensetzungen enthaltend ein oder mehrere Polymerisate auf Basis ethylenisch ungesättigter Monomere zur Herstellung von textilen Flächengebilden, indem Fasern basierend auf natürlichen oder synthetischen, organischen Materialien mit einer oder mehreren Bindemittel-Zusammensetzungen in Kontakt gebracht und anschließend gegebenenfalls getrocknet und/oder gehärtet werden, wobei die Polymerisate auf ethylenisch ungesättigten Monomeren basieren bestehend aus
a) 0,1 bis 10 Gew.-% an einem oder mehreren ethylenisch ungesättigen, Epoxy-Gruppen enthaltenden Monomeren,
b) 0,1 bis 10 Gew.-% an einem oder mehreren ethylenisch ungesättigen, Silan-Gruppen enthaltenden Monomeren und
c) einem oder mehreren weiteren, von den Monomeren a) und b) verschiedenen ethylenisch ungesättigen Monomeren ausgewählt aus der Gruppe bestehend aus Vinylestern, (Meth)acrylsäureestern, Vinylaromaten, Olefinen, 1,3-Dienen und Vinylhalogeniden, und
gegebenenfalls d) einem oder mehreren weiteren Monomeren ausgewählt aus der Gruppe bestehend aus ethylenisch ungesättigten, Sulfonsäure-Gruppen enthaltenden Monomeren oder deren Salze und ethylenisch ungesättigen Carbonsäureamiden und
gegebenenfalls 0,1 bis 10 Gew.-% Hilfsmonomeren ausgewählt aus der Gruppe bestehend aus ethylenisch ungesättigten Mono- und Dicarbonsäuren, Mono- und Diestern der Fumarsäure und Maleinsäure, Monomeren mit Hydroxy- oder CO-Gruppen, Diacetonacrylamid und Acetylacetoxyethylacrylat oder -methacrylat,
wobei sich die Angaben in Gew.-% je auf das Gesamtgewicht der Polymerisate beziehen.
Beispiele für ethylenisch ungesättigte, Epoxy-Gruppen enthaltende Monomere a) sind 4-Hydroxybutylacrylatglycidylether, 4-Hydroxybutylmethacrylatglycidylether, Allylglycidylether und insbesondere Glycidylmethacrylat oder Glycidylacrylat.

Die Polymerisate basieren auf 0,1 bis 10 Gew.-%, bevorzugt 0,5 bis 7 Gew.-%, besonders bevorzugt 0,5 bis 5 Gew.-% und am meisten bevorzugt 1 bis 5 Gew.-% an Monomeren a), je bezogen auf das Gesamtgewicht der Polymerisate.

Beispiele für ethylenisch ungesättigte, Silan-Gruppen enthaltende Monomere b) sind Verbindungen der allgemeinen Formel R¹SiR²₀₋₂(OR³)_{1-3'} wobei R² ein C₁- bis C₃-Alkylrest, C₁- bis C₃-Alkoxyrest oder Halogen, beispielsweise Chlor oder Brom, ist, R¹ die Bedeutung CH₂=CR⁴-(CH₂)₀₋₁ oder CH₂=CR⁴CO₂(CH₂)₁₋₃ mit R⁴ als Kohlenstoffrest mit 1 bis 10 C-Atomen hat, R³ ein unverzweigter oder verzweigter, gegebenenfalls substituierter Alkylrest mit 1 bis 12 C-Atomen, vorzugsweise 1 bis 3 C-Atomen, ist. Das Silicium-Atom Si ist hierbei bekanntermaßen vierwertig.

Bevorzugt sind γ-Acryl- bzw. γ-Methacryloxypropyltri(alkoxy)silane, α-Methacryloxymethyltri(alkoxy)silane, γ-Methacryloxypropylmethyl-di(alkoxy)silane, Vinylalkyldi(alkoxy)silane und Vinyltri(alkoxy)silane, wobei als Alkoxygruppen beispielsweise Methoxy-, Ethoxy-, Isopropoxy-, Methoxyethylen-, Ethoxyethylen-, Methoxypropylenglykolether- bzw. Ethoxypropylenglykolether-Reste eingesetzt werden können. Bevorzugte Monomere b) sind auch Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, 3-Methacryloxypropyltrimethoxysilan, 3-Methacryloxypropylmethyldimethoxysilan, Methacryloxymethyltrimethoxysilan, 3-Methacryl-oxypropyl-tris(2-methoxyethoxy)silan, Vinyltris-(2-methoxyethoxy)-silan, Allylvinyltrimethoxysilan, Allyltrimethoxysilan, Vinyldimethylmethoxysilan, Vinyldimethylethoxysilan, Vinylisobutyldimethoxysilan, Vinyltriisopropyloxysilan, Vinylltributoxysilan, Vinyltrihexyloxysilan, Vinylmethoxydihexyloxysilan, Vinyltrioctyloxysilan, Vinyldimethoxyoctyloxysilan, Vinylmethoxydioctyloxysilan, Vinylmethoxydilauryloxysilan und Vinyldimethoxylauryloxysilan.

Als ungesättigte Alkoxysilane werden besonders bevorzugt Vinyltrimethoxysilan, Vinylmethyldimethoxysilan, Vinyltriethoxysilan, Vinyltriisopropoxysilan, Vinylmethyldiethoxysilan, Vinyltris-(1-methoxy)-isopropoxysilan, Methacryloxypropyl-tris(2-methoxyethoxy)-silan, 3-Methacryloxypropyltrimethoxysilan, 3-Methacryloxypropylmethyldimethoxysilan und Methacryloxymethyltrimethoxysilan.

Insgesamt sind die Vinylsilane, das heißt Vinyl-Gruppen enthaltende Silane, bevorzugt.

Die Polymerisate basieren auf vorzugsweise 0,1 bis 10 Gew.-%, besonders bevorzugt 0,3 bis 7 Gew.-%, mehr bevorzugt 0,5 bis 5 Gew.-% und am meisten bevorzugt 1 bis 5 Gew.-% an Monomeren b), je bezogen auf das Gesamtgewicht der Polymerisate.

Die weiteren, von den Monomeren a) und b) verschiedenen ethylenisch ungesättigen Monomeren c) werden ausgewählt aus der Gruppe bestehend aus Vinylestern, (Meth)-acrylsäureestern, Vinylaromaten, Olefinen, 1,3-Dienen und Vinylhalogeniden .

Geeignete Vinylester sind beispielsweise solche von Carbonsäuren mit 1 bis 22 C-Atomen, insbesondere 1 bis 12 C-Atomen. Bevorzugt werden Vinylacetat, Vinylpropionat, Vinylbutyrat, Vinyl-2-ethylhexanoat, Vinyllaurat, Vinylmyristat, Vinylpalmitat, Vinylstearat, Vinylarachinat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Acrylsäureester oder Methacrylsäureester sind beispielsweise Ester von unverzweigten oder verzweigten Alkoholen mit 1 bis 22 C-Atomen, insbesondere 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat, Laurylacrylat, Myristylacrylat, Stearylacrylat, Palmitylacrylat, Laurylmethacrylat, Myrystilmethacrylat, Stearylmethacrylat oder Palmitylmethacrylat. Besonders bevorzugt sind Methylacrylat, Methylmethacrylat, n-Butylacrylat, t-Butylacrylat oder 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien oder Isopren.

Die Polymerisate basieren auf vorzugsweise 70 bis 99,8 Gew.-%, besonders bevorzugt 80 bis 99 Gew.-% und am meisten bevorzugt 90 bis 97 Gew.-% an Monomeren c), je bezogen auf das Gesamtgewicht der Polymerisate.

Bevorzugt ist auch das zusätzliche Copolymerisieren von einem oder mehreren weiteren Monomeren d) ausgewählt aus der Gruppe bestehend aus ethylenisch ungesättigten, Sulfonsäure-Gruppen enthaltenden Monomeren oder deren Salze, insbesondere deren Natriumsalze, und ethylenisch ungesättigen Carbonsäureamiden. Bevorzugt sind hierbei ethylenisch ungesättigte, Sulfonsäure-Gruppen enthaltende Monomere d). Beispiele für ethylenisch ungesättigte, Sulfonsäure-Gruppen enthaltende Monomere sind 2-Acrylamido-2-methyl-propansulfonsäure, 2-Methyl-prop-2-en-1-sulfonsäure und insbesondere Vinylsulfonsäure. Beispiele für
ethylenisch ungesättigte Carbonsäureamide sind Acrylamid, Methacrylamid, Itaconsäureamid und Crotonsäureamid.
Die Monomere c) sind vorzugsweise auch von den Monomeren d) verschieden. Mit Monomeren c) kann beispielsweise die Adhesion der Polymerisate zu den Fasern der textilen Flächengebilde weiter verbessert werden.

Die Polymerisate basieren auf vorzugsweise 0 bis 25 Gew.-%, besonders bevorzugt 0,2 bis 20 Gew.-%, mehr bevorzugt 0,2 bis 10 Gew.-%, noch mehr bevorzugt 0,2 bis 5 Gew.-% und am meisten bevorzugt 0,5 bis 5 Gew.-% an Monomeren d), je bezogen auf das Gesamtgewicht der Polymerisate.

Gegebenenfalls können noch 0,1 bis 10 Gew.-%, bezogen auf das Gesamtgewicht des Monomergemisches, Hilfsmonomere copolymerisiert werden. Bevorzugt werden 0,5 bis 5 Gew.-% Hilfsmonomere eingesetzt. Besonders bevorzugt werden keine Hilfsmonomere eingesetzt. Geeignete Hilfsmonomere sind ethylenisch ungesättigte Mono- und Dicarbonsäuren, vorzugsweise Acrylsäure, Methacrylsäure, Fumarsäure und Maleinsäure; Mono- und Diester der Fumarsäure und Maleinsäure wie die Diethyl-, und Diisopropylester . Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder - methacrylat sowie Verbindungen wie Diacetonacrylamid oder Acetylacetoxyethylacrylat oder -methacrylat.

Bevorzugt sind auch Polymerisate, die keine Einheiten von Hydroxy-, Carbonsäure- oder Carbonsäureanhydrid-Gruppen enthaltenden Monomeren enthalten. Besonders bevorzugt sind Polymerisate, die keine Einheiten von N-Methylol(meth)acrylamid oder enthalten. Bevorzugt enthalten die Polymerisate auch keine Einheiten von N-(Alkoxymethyl)-(meth)acrylamiden, wie N-(Isobutoxymethyl)acrylamid (IBMA), N-(Isobutoxymethyl)methacrylamid (IBMMA), N-(n-Butoxymethyl)acrylamid (NBMA) oder N-(n-Butoxymethyl)methacrylamid (NBMMA).

Bevorzugt werden Homo- oder Mischpolymerisate, welche ein oder mehrere Monomere a), ein oder mehrere Monomere b), ein oder mehrere Monomere c) aus der Gruppe umfassend Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol sowie gegebenenfalls ein oder mehrere Monomere d) enthalten.

Mehr bevorzugt werden Mischpolymerisate, die ein oder mehrere Monomeren a), ein oder mehrere Monomeren b) und als Monomere c) Vinylacetat und Ethylen; oder Vinylacetat, Ethylen und einem Vinylester von α-verzweigten Monocarbonsäuren mit 9 bis 11 C-Atomen; Vinylacetat und ein oder mehrere (Meth)Acrylsäureester von unverzweigten oder verzweigten Alkoholen mit 1 bis 15 C-Atomen, insbesonders Methylacrylat, Ethylacrylat, Propylacrylat, n-Butylacrylat, 2-Ethylhexylacrylat und gegebenenfalls Ethylen; ein oder mehrere Vinylester, Ethylen und ein oder mehrere Vinylhalogenide; ein oder mehrere (Meth)Acrylsäureester von unverzweigten oder verzweigten Alkoholen mit 1 bis 15 C-Atomen, wie n-Butylacrylat und 2-Ethylhexylacrylat und/oder Methylmethacrylat; Styrol und ein oder mehrere Monomere aus der Gruppe Methylacrylat, Ethylacrylat, Propylacrylat, n-Butylacrylat, 2-Ethylhexylacrylat; 1,3-Butadien und Styrol und/oder Methylmethacrylat sowie gegebenenfalls weitere Acrylsäureester enthalten; wobei die genannten Polymerisate gegebenenfalls noch ein oder mehrere Monomere d) und gegebenenfalls ein oder mehrere der obengenannten Hilfsmonomere enthalten können.

Besonders bevorzugt werden Vinylester-Mischpolymerisate, die ein oder mehrere Monomeren a), ein oder mehrere Monomeren b) und als Monomere c) eine oder mehrere Vinylester und 1 bis 50 Gew.-% Ethylen; Vinylacetat und 1 bis 50 Gew.-% Ethylen und 1 bis 50 Gew.-% ein oder mehrere Comonomere aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11; ein oder mehrere Vinylester, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesonders n-Butylacrylat oder 2-Ethylhexylacrylat; 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; ein oder mehrere Vinylester, 1 bis 50 Gew.-% Ethylen und 1 bis 60 Gew.-% Vinylchlorid enthalten; wobei die Polymerisate noch ein oder mehrere Monomere d) und gegebenenfalls die genannten Hilfsmonomere in den genannten Mengen enthalten können, und sich die Angaben in Gew.-% auf jeweils 100 Gew.-% aufaddieren.

Besonders bevorzugt werden auch (Meth)acrylsäureester-Polymerisate, die ein oder mehrere Monomeren a), ein oder mehrere Monomeren b) und als Monomere c) n-Butylacrylat oder 2-Ethylhexylacrylat; Methylmethacrylat, n-Butylacrylat und/oder 2-Ethylhexylacrylat; Styrol und ein oder mehrere Monomere aus der Gruppe Methylacrylat, Ethylacrylat, Propylacrylat, n-Butylacrylat, 2-Ethylhexylacrylat; Vinylacetat und ein oder mehrere Monomere aus der Gruppe Methylacrylat, Ethylacrylat, Propylacrylat, n-Butylacrylat, 2-Ethylhexylacrylat und gegebenenfalls Ethylen; wobei die Polymerisate noch ein oder mehrere Monomere d) und gegebenenfalls die genannten Hilfsmonomere in den genannten Mengen enthalten können, und sich die Angaben in Gew.-% auf jeweils 100 Gew.-% aufaddieren.

Am meisten bevorzugt werden Mischpolymerisate, die ein oder mehreren Monomere a), ein oder mehrere Monomeren b) und als Monomere c) Vinylacetat und 5 bis 50 Gew.-% Ethylen; Vinylacetat, 1 bis 50 Gew.-% Ethylen und 1 bis 50 Gew.-% von einem Vinylester von α-verzweigten Monocarbonsäuren mit 9 bis 11 C-Atomen; 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; Vinylacetat, 5 bis 50 Gew.-% Ethylen und 1 bis 60 Gew.-% Vinylchlorid enthalten, wobei die Polymerisate noch ein oder mehrere Monomere d) in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im Allgemeinen eine Glasübergangstemperatur Tg von < +120°C, vorzugsweise -50°C bis +60°C, noch mehr bevorzugt -30°C bis +40°C und am meisten bevorzugt -15°C bis +20°C, resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Polymerisate sind erhältlich mittels radikalisch initiierter Polymerisation. Die Herstellung der Polymerisate kann in an sich bekannter Weise beispielsweise nach dem Suspensionspolymerisationsverfahren oder vorzugsweise nach dem Emulsionspolymerisationsverfahren in Gegenwart von Schutzkolloiden oder vorzugsweise von Emulgatoren erfolgen. Die Polymerisationstemperatur beträgt im Allgemeinen 20°C bis 120°C, vorzugsweise 40°C bis 100°C, am meisten bevorzugt 50°C bis 80°C. Bei der Copolymerisation von gasförmigen Comonomeren, wie Ethylen, wird vorzugsweise unter Druck, im Allgemeinen zwischen 5 bar und 100 bar, gearbeitet. Die Polymerisation erfolgt im Allgemeinen in wässrigem Medium. Zur Steuerung des Molekulargewichts können während der Polymerisation gängige regelnde Substanzen eingesetzt werden.

Die Initiierung der Polymerisation kann mit den für die Emulsionspolymerisation bzw. Suspensionspolymerisation gebräuchlichen wasserlöslichen bzw. monomerlöslichen Initiatoren oder Redox-Initiator-Kombinationen erfolgen. Als Reduktionsmittel werden Ascorbinsäure, Isoascorbinsäure oder deren Salze, Sulfit, Sulfinsäure oder auch Sulfinsäurederivate, auch bekannt unter dem Handelsnamen Brueggolit® FF6, bevorzugt. Als Oxidationsmittel werden Persulfatverbindungen bevorzugt, insbesondere Ammonium- oder Alkali-Persulfate. Weiterhin bevorzugt werden als Oxidationsmittel auch Hydroperoxide eingesetzt, insbesondere tert.-Butylhydroperoxid oder Wasserstoffperoxid. Als Initiatoren werden vorzugsweise keine Formaldehyd-freisetzenden Substanzen, wie Formaldehydsulfoxylate oder Formopon, eingesetzt.

Zur Stabilisierung des Polymerisationsansatzes bzw. der Polymerdispersionen können die üblicherweise bei der Emulsionspolymerisation verwendeten ionischen oder nichtionischen Emulgatoren eingesetzt werden. Vorzugsweise werden bis zu 6 Gew.-%, besonders bevorzugt 0,1 bis zu 5 Gew.-% und am meisten bevorzugt 1 bis 4 Gew.-% an einem oder mehreren Emulgatoren eingesetzt, bezogen auf das Gesamtgewicht der insgesamt eingesetzten Monomeren.

Geeignete Emulgatoren sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ölsäuresulfonate, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten. Bevorzugt ist der Einsatz von Alkylethersulfaten oder Dodecylbenzenesulfonaten.

Die Emulsionspolymerisation kann in Gegenwart, vorzugsweise jedoch in Abwesenheit von Schutzkolloiden durchgeführt werden. Beispiele für Schutzkolloide sind Polyvinylalkohole; Polyvinylpyrrolidone; Polyvinylacetale; Polysaccharide; synthetische Polymere wie Poly-(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Styrolmaleinsäureund Vinylethermaleinsäure-Copolymere.

Die Polymerisate liegen vorzugsweise in Form von Emulgator stabilisierten, wässrigen Dispersionen vor. Bevorzugt sind auch Polymerisate in Form von wässrigen Dispersionen, die keine Emulgatoren und keine Schutzkolloide enthalten.

Die Monomere können ganz oder vorzugsweise teilweise vorgelegt werden und die gegebenenfalls verbliebene Menge an Monomeren kann während der Polymerisation zudosiert werden. Die Monomere c) werden vorzugsweise teilweise vorgelegt und teilweise zudosiert. Die Monomere a) und die Monomere b) werden vorzugsweise vollständig zudosiert, insbesondere parallel, vorzugsweise aber räumlich getrennt. Etwaige Monomere d) werden vorzugsweise vollständig vorgelegt, können aber auch teilweise vorgelegt und teilweise zudosiert werden. Die Emulgatoren können ganz oder vorzugsweise teilweise vorgelegt werden und die gegebenenfalls verbliebene Menge an Emulgatoren kann während der Polymerisation zudosiert werden. Vorzugsweise werden die Emulgatoren vollständig zudosiert.

Die Polymerisate in Form von wässrigen Dispersionen haben im Allgemeinen einen Festgehalt von 35 bis 65 Gew.-%, vorzugsweise von 40 bis 60 Gew.-% und besonders bevorzugt 45 bis 55 Gew.-%. Die Brookfield-Viskosität der wässrigen Dispersionen beträgt vorzugsweise 50 bis 2000 mPas, besonders bevorzugt 100 bis 1500 mPas (bestimmt mit einem Brookfield-Viskosimeter bei 23°C bei 20 UPM bei einem Feststoffgehalt der Dispersionen von 49 bis 51 Gew.-%).

Die volumenmittleren Teilchengrößendurchmesser betragen vorzugsweise 50 bis 4000 nm, besonders bevorzugt 100 bis 500 nm (bestimmt mit dem Messgerät Beckmann Coulter® LS 13 320 nach Gerätevorschrift, unter Verwendung der optischen Konstanten für Polyvinylacetat; die Verdünnung der Dispersion erfolgte mit Wasser; als Teilchengröße ist hier der Zentralwert der Volumenverteilungsfunktion des Partikeldurchmessers x3,50 angegeben).

Die Bindemittel-Zusammensetzungen können auch ein oder mehrere Additive enthalten, beispielsweise Emulgatoren, wie Fettalkoholethoxylate mit niedrigen Ethoxylierungsgraden, insbesondere 2 bis 5, oder Di-Isotridecylsulfosuccinat oder deren Salze, wie Natriumsalze. Übliche Einsatzmengen an Emulgatoren betragen, bezogen auf das Trockengewicht des Polymerisats, 0 bis 1 Gew.-%, vorzugsweise 0 bis 0,6 Gew.-%. Mit Emulgatoren kann die Hydrophilie der mit solchen Bindemittel-Zusammensetzungen ausgerüsteten textilen Flächengebilde erhöht werden. Weitere Additive sind saure Katalysatoren, wie Ammoniumchlorid, Citronensäure oder Schwefelsäure. Saure Katalysatoren werden üblicherweise in Mengen von 0 bis 2 Gew.-%, vorzugsweise 0,1 bis 1 Gew.-% zugesetzt, bezogen auf das Trockengewicht des Polymerisats. Handelt es sich bei den sauren Katalysatoren um Brönstedt-Säuren, so wird von diesen so viel eingesetzt, dass ein pH-Wert von vorzugsweise 0 bis 4 und besonders bevorzugt von 2 bis 3 resultiert. Die erfindungsgemäße Herstellung der textilen Flächengebilde erfolgt, indem Fasern mit einer oder mehreren erfindungsgemäßen Bindemittel-Zusammensetzungen, insbesondere in Form ihrer wässrigen Dispersionen, in Kontakt gebracht und anschließend gegebenenfalls getrocknet und/oder gehärtet werden.

Das Trocknen bzw. Härten erfolgt vorzugsweise bei Temperaturen von ≤ 160°C, besonders bevorzugt 120 bis 160°C und am meisten bevorzugt bei 140 bis 160°C.
Die Fasern basieren auf natürlichen oder synthetischen, organischen Materialien. Beispiele hierfür sind Kunstfasern auf Basis von faserbildenden Polymeren wie Viskose-, Polyester-, Polyamid-, Polypropylen-, Polyethylen-Fasern. Beispiele für natürliche Fasermaterialien sind Holz-, Woll-, Baumwolle-, Jute-, Flachs-, Hanf-, Kokos-, Ramie-, Sisal- und insbesondere Cellulosefasern. Die Fasern basieren nicht auf anorganischen Materialien. Die Fasern sind also keine Keramikfasern oder Mineralfasern und insbesondere keine Glasfasern, insbesondere wenn anorganische Fasern mengenmäßig den Hauptteil des textilen Flächengebildes darstellen. Die Fasern können lose oder auch in Form von Bündeln oder gewebten Textilien, Garnen oder vorzugsweise in Form von Nonwovens, wie Vliesen, Gelegen oder Gewirken, eingesetzt werden. Die Nonwovens können gegebenenfalls thermisch oder mechanisch vorverfestigt, beispielsweise genadelt, sein.
Die Fasern können beliebige Längen aufweisen, wie beispielsweise Längen von 1 mm bis unendlicher Länge, vorzugsweise 5 mm bis 100 mm, besonders bevorzugt 7 mm bis 75 mm und am meisten bevorzugt 10 mm bis 60 mm. Die Fasern können die üblichen Durchmesser haben, vorzugsweise Durchmesser von 0,1 µm bis 1 mm, besonders bevorzugt 0,5 µm bis 100 µm und am meisten bevorzugt 1 µm bis 50 µm.

Zur erfindungsgemäßen Herstellung der textilen Flächengebilde werden die Polymerisate in einer Menge von vorzugsweise 1 bis 50 Gew.-%, besonders bevorzugt 10 bis 30 Gew.-% und am meisten bevorzugt 15 bis 25 Gew.-% eingesetzt, bezogen auf das Gesamtgewicht der Fasern. Der Anteil der Fasern beträgt vorzugsweise 40 bis 99 Gew.-%, besonders bevorzugt 60 bis 90 Gew.-% und am meisten bevorzugt 70 bis 80 Gew.-%, bezogen auf das Gesamtgewicht der textilen Flächengebilde.

Zur erfindungsgemäßen Herstellung der textilen Flächengebilde kann dabei so vorgegangen werden, dass die Fasern mit den Bindemittel-Zusammensetzungen vermischt werden und das Gemisch aus Fasern und Bindemittel-Zusammensetzungen vor der Verfestigung mittels der üblichen Verfahren der Nonwoven-Technologie, beispielsweise mittels einer Luftlege-, Nasslege-, Direktspinn- oder Krempelvorrichtung, ausgelegt wird. Anschließend kann mittels Temperaturerhöhung, gegebenenfalls unter Anwendung von Druck, das textile Flächengebilde gebunden werden.

Es kann auch so vorgegangen werden, dass vor der Verfestigung die Fasern flächenhaft ausgebreitet werden. Die Verfahren hierzu sind bekannt und primär von der Anwendung, in die das verfestigte Fasermaterial geht, abhängig. Die Fasern können beispielsweise mittels einer Luftlege-, Nasslege-, Direktspinn- oder Krempelvorrichtung ausgelegt werden. Gegebenenfalls kann vor der Verfestigung mit Bindemittel noch mechanisch verfestigt werden, beispielsweise durch Kreuzlegen, Nadeln oder Wasserstrahlverfestigung. Anschließend kann die Bindemittel-Zusammensetzung in die ausgelegten Fasern aufgebracht werden, wobei die Bindemittel-Zusammensetzungen flächenförmig, punktförmig oder musterartig in Teilbereiche aufgebracht werden kann. Anschließend können die Fasern durch Anwendung von Temperatur und gegebenenfalls Druck gebunden werden.

Die Bindemittel-Zusammensetzungen eignen sich auch zur Herstellung von Laminaten, wobei zwei Faserlagen miteinander verklebt werden, oder eine Faserlage mit einem weiteren Substrat verklebt wird. Dabei kann so vorgegangen werden, dass eine Faserlage ausgelegt wird, wobei die Bindemittel-Zusammensetzung vorher gemischt oder nach dem Auslegen aufgebracht wird, und eine weitere Faserlage beispielsweise durch Luftlegen aufgelegt wird. Statt der zweiten Faserlage kann auch ein anderes Substrat beispielweise eine Kunststofffolie aufgelegt werden. Anschließend erfolgt die Bindung durch Anwendung von Temperatur und gegebenenfalls Druck. Mit dieser Verfahrensweise werden beispielsweise Dämmstoffe aus Reißbaumwolle zugänglich, welche mit einem Faservlies als Deckvlies dauerhaft kaschiert sind.

Geeignet sind die Bindemittel-Zusammensetzungen auch zur Herstellung von voluminösen Vliesstoffen oder Watten, die beispielsweise als Halbzeuge für die Herstellung von Formteilen aus Fasermaterialien oder als Polster-, Isolier- und Filterwatten Verwendung finden. Dazu können die Bindemittel-Zusammensetzung auf die Fasern aufgebracht und durch Temperaturerhöhung, bevorzugt in einem Formwerkzeug, verfestigt werden.

Bei den erfindungsgemäß hergestellten textilen Flächengebilden handelt es sich vorzugsweise um Vliesstoffe, insbesondere Tissues, Filze, Watten oder grobmaschige, lockere Gewebe, Gestricke oder Gewirke. Die textilen Flächengebilde können beispielsweise im Automobilsektor, für Haushaltsprodukte, wie Tischdecken, Hygieneartikel, wie Toilettenpapier, in der Bekleidungsindustrie, für medizinische Textilien oder Geotextilien eingesetzt werden.

Durch die erfindungsgemäße Vorgehensweise kann die Freisetzung von Formaldehyd aus textilen Flächengebilden reduziert werden, insbesondere im Vergleich zu Verfahren unter Einsatz von N-Methylolacrylamid-Einheiten enthaltenden Polymeren oder Phenol-Formaldehyd-Harzen als Bindemittel. Es sind sogar textile Flächengebilde zugänglich, die im Wesentlichen frei von Formaldehyd sind. Darüber hinaus zeigen die erfindungsgemäß hergestellten textilen Flächengebilde überraschend hohe Trocken- und/oder Nassfestigkeiten und haben zudem die gewünschte Wasseraufnahmekapazität und erfüllen die geforderte Wassereindringzeit. Die erfindungsgemäßen Bindemittel-Zusammensetzungen sind auch lagerstabil. So ändert sich beispielsweise die Viskosität der Bindemittel-Zusammensetzungen nach Lagerung für sechs Monate selbst bei 40°C um vorzugsweise weniger als 100%. Vorteilhafterweise sind die erfindungsgemäßen textilen Flächengebilde auch geruchsneutraler als herkömmliche Produkte unter Einsatz von Bindemitteln, die beispielsweise mit Sulfit verkappte Aldehydfunktionen oder verkappte Isocyanate enthalten. Insgesamt kann mit der erfindungsgemäßen Vorgehensweise die Freisetzung toxischer Substanzen unterbunden werden, so dass so erhältliche textile Flächengebilde sogar die Anforderungen von Lebensmittelzulassungsbehörden erfüllen.

Die nachfolgenden Beispiele dienen der weiteren Erläuterung der Erfindung.

### Rohstoffe:

Alle eingesetzten Rohstoffe waren kommerziell verfügbare technische Produkte, die keiner speziellen Vorbehandlung unterzogen wurden. Als "Wasser" wurde durch Ionenaustausch entsalztes Wasser eingesetzt. Lösungen sind sämtlich wässerig und deren Konzentration ist in Gew.-% angegeben.

Neben Vinylacetat (VAc) kamen folgende Monomere zum Einsatz: Ethylen (Eth), Butylacrylat (BA), Vinylsulfonat als 25 %ige Lösung (VS), Acrylamid als 30 %ige Lösung (AMD), Glycidylmethacrylat (GMA), Geniosil® XL10 (Vinyltrimethoxysilan; Handelsname der Wacker Chemie), Geniosil® GF56 (Vinyltriethoxysilan; Handelsname der Wacker Chemie).

Als Oxidationsmittel wurden Natrium- (NPS) oder Kaliumperoxodisulfat (KPS) eingesetzt. Als Reduktionsmittel wurde Ascorbinsäure (Asc) oder Natriumisoascorbat (NAsc) verwendet.

Die Copolymerisationen mit Ethylen wurden in einem 2 L-Druckreaktor für Arbeitsdrücke bis 85 bar durchgeführt, ausgerüstet mit elektronischer Temperaturmessung und -regelung, einem dreistufigen Paddelrührer, Sicherheitsventil und fünf parallelen Dosiermöglichkeiten, betrieben bei 400 UpM. Alle Drucklosreaktionen wurden in einem 2 L-Glasreaktor mit Rückflusskühler und Ankerrührer bei einer Rührergeschwindigkeit von 200 UpM durchgeführt.

### Beispiel 1 (Bsp.1):

Im Druckreaktor wurden 493,5 g Wasser, 22,9 g VS und 27,4 g AMD vorgelegt. Mit einer 1 %igen Ameisensäurelösung wurde der pH-Wert auf pH = 4,0 eingestellt. Dann erfolgte die Zugabe von 4 g einer 1 %igen Lösung von Ammoniumeisen(II)sulfat sowie von 210 g Vinylacetat. Der Ansatz wurde auf 50°C temperiert und 224 g Eth aufgedrückt. Bei einer Solltemperatur von 50°C wurden die Dosierung 1, die aus einer 10,44 %igen NPS-Lösung bestand, sowie die Dosierung 2, einer 5 %igen Lösung von Asc, mit einer Dosierrate von jeweils 15 ml/h zugegeben. 10 min nach Reaktionsbeginn erfolgte der Start der Dosierungen 3 und 4 für jeweils 180 min. Bei Dosierung 3 handelte es sich um ein Gemisch aus 496 g Vinylacetat, 10 g GF56 und 20 g GMA, dieses wurde mit einer Rate von 187 ml/h dosiert. Bei Dosierung 4 handelte es sich um eine Mischung von 95,4 g Wasser, 30,5 g Disponil FES27 (Alkylethersulfat-C12-14-Natriumsalz, 28 %ig in Wasser; Handelsname der BASF) und 68,5 g Acrylamid, mit 10 %iger Natronlauge auf pH = 3,9 eingestellt und mit einer Rate von 63,3 ml/h dosiert. Gleichzeitig wurde die Dosierrate der Dosierungen 1 und 2 auf jeweils 19 ml/h erhöht. Diese beiden Dosierungen liefen für insgesamt 285 min.

Nach Beendigung der Dosierungen 1 und 2 erfolgte die Zugabe von 20 g einer 10 %igen H₂O₂ Lösung. Der pH-Wert wurde mit einer 10 %igen Natronlauge auf pH = 4,5 eingestellt, die Dispersion auf Raumtemperatur abgekühlt und der Druckreaktor entspannt. Abschließend wurde mit Natronlauge ein pH-Wert von 5,5 eingestellt.

### Beispiel 2 (Bsp.2):

Es wurde wie im Beispiel 1 verfahren, mit dem Unterschied, dass sich die Dosierung 3 aus 446 g Vinylacetat, 40 g GF56 und 40 g GMA zusammensetzte und statt der Ascorbinsäurelösung eine Lösung von Natriumisoascorbat eingesetzt wurde.

### Beispiel 3 (Bsp.3):

Es wurde wie im Beispiel 1 verfahren, mit dem Unterschied, dass sich die Dosierung 3 aus 456 g Vinylacetat und 5 g GF56 zusammensetzte. Diese wurde mit einer Rate von 165 ml/h dosiert. 10 min nach Dosierende der Dosierung 3 wurde eine zusätzliche Dosierung 5 gestartet, welche sich aus 45 g Vinylacetat und 20 g GMA zusammensetzte. Die Dosierrate betrug 200 ml/h.

### Beispiel 4 (Bsp.4):

Es wurde wie im Beispiel 1 verfahren, mit dem Unterschied, dass sich die Dosierung 3 aus 486 g Vinylacetat, 30 g XL10 und 10 g GMA zusammensetzte.

### Beispiel 5 (Bsp.5):

Es wurde wie im Beispiel 3 verfahren, mit dem Unterschied, dass sich die Dosierung 3 aus 396 g Vinylacetat und 10 g XL10, die Dosierung 5 aus 90 g Vinylacetat und 30 g GMA zusammensetzte. Die Dosierraten betrugen 125 ml/h für Dosierung 3 und 260 ml/h für Dosierung 5.

### Beispiel 6 (Bsp.6):

In einem 2 L-Glaskolben wurden 8,1 g VS, 0,4 g Disponil FES27 sowie 354,1 g Wasser vorgelegt. Mit einer 1 %igen Ameisensäurelösung wurde der pH-Wert auf pH = 4,0 eingestellt, dann erfolgte die Zugabe von 67,8 g VAc, 7,6 g BA und 2,8 g einer 1 %igen Lösung von Ammoniumeisen(II)sulfat. Der Ansatz wurde auf 60°C temperiert und nach Erreichen der Solltemperatur wurden die Dosierungen 1 und 2 mit Raten von jeweils 21 ml/h eingefahren. Dosierung 1 bestand aus einer 3 %igen Lösung von Kaliumpersulfat, Dosierung 2 aus einer 1,7 %igen Lösung von Ascorbinsäure. Beide Dosierungen liefen für 315 min. 15 min nach Dosierung 1 wurde die Dosierung 3 eingefahren und für 240 min mit einer Rate von 223 ml/h laufen gelassen. Diese Dosierung bestand aus 78,9 g BA, 709,0 g VAc, 22,7 g GMA und 22,7 g GF56. 5 min nach Dosierung 3 wurde die Dosierung 4 eingefahren und für 230 min mit einer Rate von 95,6 ml/h laufen gelassen. Diese Dosierung bestand aus 20,2 g Genapol X150 (Isotridecylalkoholethoxylat mit einem mittleren Ethoxylierungsgrad von 15, 40 %ig in Wasser, Handelsname der Firma Clariant), 30,3 g Disponil FES27 sowie 317 g Wasser. Der Ansatz wurde durch Zugabe von 4 g einer 15 %igen Lösung von tert.-Butylhydroperoxid sowie 6 g einer 10 %igen Lösung von Ascorbinsäure nachpolymerisiert und dann auf Raumtemperatur abgekühlt.

### Beispiel 7 (Bsp.7):

Es wurde wie im Beispiel 6 verfahren, aber die Dosierung 3 bestand aus 78,9 g BA, 587,0 g VAc und 4,5 g XL10 und wurde für 200 min mit einer Rate von 240 ml/h dosiert. 10 min nach Ende der Dosierung 3 wurde eine Dosierung 5 gestartet. Diese lief für 30 min mit einer Rate von 350 ml/h und setzte sich aus 122 g VAc und 40,9 g GMA zusammen.

### Vergleichsbeispiel 1 (VBsp.1):

Es wurde wie im Beispiel 1 verfahren, allerdings bestand die Dosierung 3 aus 506 g Vinylacetat und 20 g GMA.

### Vergleichsbeispiel 2 (VBsp.2):

Es wurde wie im Beispiel 3 verfahren, allerdings bestand die Dosierung 3 aus 461 g Vinylacetat.

### Vergleichsbeispiel 3 (VBsp.3):

Es wurde wie im Beispiel 1 verfahren, allerdings bestand die Dosierung 3 aus 516 g Vinylacetat und 10 g GF56.

### Vergleichsbeispiel 4 (St/Ac) (VBsp.4):

Es wurde eine wässrige Dispersion Primal™1845K der Firma DOW Chemical eingesetzt. Die Festigkeiten hiermit gebundener Tissue-Vliese wurden zweimal bestimmt, die Festigkeiten hiermit gebundener Airlaid-Vliese wurden dreimal bestimmt und die erhaltenen Ergebnisse jeweils gemittelt.

### Testmethoden zur Charakterisierung gebundener Vliesstoffe:

Das Bindevermögen der beschriebenen Polymerdispersionen wurde separat auf zwei verschiedenen, zellstoffhaltigen und nicht gewebten textilen Flächengebilden vergleichend charakterisiert. In einigen Fällen wurden die Polymerdispersionen auf einen pH-Wert von 2,5 eingestellt, wie in Tabelle 1 angegeben. Hierzu wurde Schwefelsäure zugesetzt.

### Bestimmung der Festigkeitswerte für Tissue-Vliesstoffe:

Ein typisches Tissuepapier (100%-Zellstoff; 26 g/m²; Trockenfestigkeit: 3,7 N/45 mm; Nassfestigkeit: 0,9 N/45 mm; mit 2 ppm Formaldehyd) wurde mit einer Flotte der mit Wasser auf einen Festgehalt von 30% verdünnten Polymerdispersion des jeweiligen (Vergleichs)Beispiels im Spalt ("Zwickel") eines Mathis HVF Foulard (Fa. Mathis / CH) homogen imprägniert und mittels eines Labordurchlufttrockners (Fa. Fleissner; 3 min/ 150°C) getrocknet und vernetzt. Die entsprechenden Bindemittelaufträge wurden gravimetrisch nach 24h Klimatisierung im Normklima (ISO 139; 2005; 23 ± 2°C; 50 ± 3%) bestimmt. Zur Bestimmung der entsprechenden Reißfestigkeiten wurden je 15 Streifen in Querrichtung mit der Breite 15±1 mm bzw. Länge 150±15 mm entnommen. Jeweils 3 der 15 Vliesstreifen wurden mittels Heftzange zu einer Messprobe zusammengefasst und insgesamt n = 5 Messproben einer Reißfestigkeitsbestimmung unterzogen.

Alle Reißfestigkeiten wurden analog der DIN EN 29073 (Teil 3: Prüfverfahren für Vliesstoffe, 1992) bestimmt und die Messproben zur Bestimmung der Trockenreißfestigkeit mittels einer Höchstzugkraftmessung an einer Zwick® 1445-Prüfmaschine (100 N Messdose) mit einer TestXpert®-Software Version 11.02 (Fa. Zwick Roell) im trockenen Zustand (dry) bei einer Einspannlänge von 100±1 mm, einer Einspannbreite von 15±1 mm und bei einer Deformationsgeschwindigkeit von 100 mm/min bestimmt. Zur Messung der Nassreißfestigkeiten (wet) wurden die Streifenproben zuvor 1 min in Wasser gelagert und wie zuvor beschrieben bestimmt. Die Ergebnisse der Austestung sind in Tabelle 1 unter Tissue-Vliesstoffen in den Spalten "dry" und "wet" aufgeführt.

### Bestimmung der Festigkeitswerte für Airlaid-Vliesstoffe:

Auf ein thermisch vorgebundenes Airlaidvlies (75 g/m²; 88% Fluff pulp und 12% PP/PE-Bikomponentenfasern; 0,85 mm Dicke, Trockenfestigkeit 500 g/ 5cm ; Nassfestigkeit 300 g/5 cm) wurde die mit Wasser auf einen Festgehalt von 20% verdünnte Polymerdispersion des jeweiligen (Vergleichs)Beispiels mittels einer Sprühflotte mit einem halbautomatischen Sprühaggregat nach dem Airlessverfahren (Schlitzdüsen Unijet 8001 E; 5 bar) homogen beidseitig besprüht und anschließend in einem Labor-Durchlufttrockner (Mathis LTF; Fa. Mathis / CH) für 3 min bei 160°C getrocknet. Pro Reißfestigkeitsprüfung wurden je 10 Vliesstreifen (20 cm Einspannlänge; 5 cm Einspannlänge) in Querrichtung zur Maschinenproduktionsrichtung angefertigt und, wie oben für die Tissue-Vliesstoffe beschrieben, einer Höchstzugkraftmessung mit einer Deformationsgeschwindigkeit von 150 mm/min unterzogen. Die Ergebnisse der Austestung sind in Tabelle 1 unter Airlaid-Vliesstoffen in den Spalten "dry" und "wet" zusammengefasst.

### Bestimmung der Tropfeneinsinkzeit (TEZ) für Tissue-Vliesstoffe:

Die Messung der Tropfeneinsinkzeit TEZ dient der Beurteilung der Hydrophilie bzw. Hydrophobie des verfilmten Polymers auf einem faserförmigen Substrat (Fähigkeit der Benetzung durch Wasser). Der jeweilige Tissue-Vliesstoff wurde auf ein vierfach gefaltetes Taschentuch der Marke "Tempo" gelegt (Funktion als Saugkörper). Anschließend wurde eine Edelstahl-Lochmaske (d=14cm, 1 cm dick) mit fünf runden Löchern (d=3cm) auf die entsprechende Vliesprobe gelegt. Unter Verwendung einer Plastikpipette wurde aus einer Höhe von 1 cm, durch jedes der fünf Löcher, 1 Tropfen einer blauen Tinte (angesetzt aus 1 g Patentblau V (Handelsname der Firma Caesar & Loretz) in einem Liter destilliertem Wasser) gegeben und die Zeit [s] mit der Stoppuhr erfasst, die der Tropfen benötigte, um den Tissue-Vliesstoff vollständig zu durchdringen. Bei Erreichen von 300 s wurde die Prüfung abgebrochen. Es wurden pro Vliesseite jeweils 10 Einzelmessungen durchgeführt und entsprechend gemittelt bzw. bei hydrophoben Bindern > 300 sec. notiert. Die Ergebnisse der Austestung sind in Tabelle 1 aufgeführt.

### Bestimmung des relativen Wasseraufnahmevermögens (Kapazität) für Airlaid- Vliesstoffe:

Zur Beurteilung des relativen Wasseraufnahmevermögens, welche ein Maß für die Hydrophilie bzw. Hydrophobie der Polymerbinder auf den Fasern ist, wurden mit einer Schablone je drei Probenstücke à 4 mal 4 cm aus den Airlaid-Vliesstoffen herausgeschnitten. Zur Bestimmung des Wasseraufnahmevermögens wurde das jeweilige Probenstück mit einer Kantenseite in einer Krüss K12-Tensiometer mit einem Wasservorrat auf einer Präzisionswaage in Berührung gebracht. Das Gewicht der Wasseraufnahme in Folge kapillarer Saugwirkung wurde fortlaufend gemessen und in einem Diagramm als Masse/Zeit dargestellt (Sorptionsmethode Krüss LabDesk 2.5. Software).

Die aufgenommene Wassermenge in Gramm (g) entspricht der Wasseraufnahmekapazität (hiernach kurz Kapazität genannt) des Airlaid-Vliesstoffes und wird in einer Masse (g) gegen Zeit (s)-Auftragung bei 180s ausgelesen. Die Ergebnisse der Austestung sind in Tabelle 1 aufgeführt.

**Tabelle 1: Prüfergebnisse für Tissue- bzw. Airlaid-Vliesstoffe:**

| 1 | 2 | 3 | 4 | 5 | 6 | 7 | 8 |
|---|---|---|---|---|---|---|---|
| Polymerdispersion | pH-Wert | Tissue-Vliesstoffe | | | Airlaid-Vliesstoffe | | |
| | | dry | wet | TEZ | dry | wet | Kapazität |
| | | % | % | sec | % | % | g |
| VBsp.1 | 5,7 | 100 | 100 | 1 | 100 | 100 | 1,79 |
| | 2,5 | 103 | 101 | 1 | 114 | 103 | 1,87 |
| VBsp.2 | 5,3 | 105 | 100 | 3 | 102 | 98 | 1,67 |
| VBsp.3 | 5,6 | 95 | 90 | 6 | 90 | 90 | 1,45 |
| | 2,5 | 93 | 85 | 4 | 85 | 88 | 1,53 |
| VBsp.4 | 4,2 | 104 | 145 | > 300 | 110 | 140 | 0,10 |
| Bsp.1 | 5,6 | 103 | 150 | 5 | 111 | 148 | 1,21 |
| | 2,5 | 107 | 158 | 3 | 115 | 137 | 1,62 |
| Bsp. 2 | 5,3 | 100 | 160 | 1 | 107 | 150 | 1,98 |
| Bsp. 3 | 5,5 | 100 | 145 | 2 | 113 | 139 | 1,77 |
| | 2,5 | 107 | 168 | 1 | 122 | 158 | 1,90 |
| Bsp. 4 | 5,7 | 95 | 122 | 7 | 103 | 133 | 1,40 |
| Bsp. 5 | 5,5 | 105 | 168 | 2 | 112 | 162 | 1,73 |
| | 2,5 | 105 | 155 | 1 | 106 | 155 | 1,94 |
| Bsp. 6 | 4,3 | 122 | 150 | 7 | 117 | 134 | 1,40 |
| Bsp. 7 | 4,1 | 120 | 163 | 4 | 116 | 156 | 1,82 |

Legende zu Tabelle 1:
- Spalte 1:: eingesetzte Dispersion der Beispiele 1 bis 7 bzw. der Vergleichsbeispiele 1 bis 4,
- Spalte 2:: pH-Wert der Flotte,
- Spalte 3:: Trockenfestigkeit Tissue-Vlies in %, bezogen auf den Festigkeitswert von Vergleichsbeispiel 1,
- Spalte 4:: Nassfestigkeit Tissue-Vlies in %, bezogen auf den Festigkeitswert von Vergleichsbeispiel 1,
- Spalte 5:: Tropfeneinsinkzeit gebundenes Tissuevlies in Sekunden,
- Spalte 6:: Trockenfestigkeit Airlaid-Vlies in %, bezogen auf den Festigkeitswert von Vergleichsbeispiel 1,
- Spalte 7:: Nassfestigkeit Airlaid-Vlies in %, bezogen auf den Festigkeitswert von Vergleichsbeispiel 1,
- Spalte 8:: Wasseraufnahmekapazität des gebundenen Airlaid-Vliesstoffes in Gramm.

## Patentansprüche

1. Verwendung von Bindemittel-Zusammensetzungen enthaltend ein oder mehrere Polymerisate auf Basis ethylenisch ungesättigter Monomere zur Herstellung von textilen Flächengebilden,
indem Fasern basierend auf natürlichen oder synthetischen, organischen Materialien mit einer oder mehreren Bindemittel-Zusammensetzungen in Kontakt gebracht und anschließend gegebenenfalls getrocknet und/oder gehärtet werden,
wobei die Polymerisate auf ethylenisch ungesättigten Monomeren basieren bestehend aus
a) 0,1 bis 10 Gew.-% an einem oder mehreren ethylenisch ungesättigen, Epoxy-Gruppen enthaltenden Monomeren,
b) 0,1 bis 10 Gew.-% an einem oder mehreren ethylenisch ungesättigen, Silan-Gruppen enthaltenden Monomeren und
c) einem oder mehreren weiteren, von den Monomeren a) und b) verschiedenen ethylenisch ungesättigen Monomeren ausgewählt aus der Gruppe bestehend aus Vinylestern, (Meth)acrylsäureestern, Vinylaromaten, Olefinen, 1,3-Dienen und Vinylhalogeniden, und
gegebenenfalls d) einem oder mehreren weiteren Monomeren ausgewählt aus der Gruppe bestehend aus ethylenisch ungesättigten, Sulfonsäure-Gruppen enthaltenden Monomeren oder deren Salze und ethylenisch ungesättigen Carbonsäureamiden und
gegebenenfalls 0,1 bis 10 Gew.-% Hilfsmonomeren ausgewählt aus der Gruppe bestehend aus ethylenisch ungesättigten Mono- und Dicarbonsäuren, Mono- und Diestern der Fumarsäure und Maleinsäure, Monomeren mit Hydroxy- oder CO-Gruppen, Diacetonacrylamid und Acetylacetoxyethylacrylat oder -methacrylat.
wobei sich die Angaben in Gew.-% je auf das Gesamtgewicht der Polymerisate beziehen.

2. Verwendung von Bindemittel-Zusammensetzungen zur Herstellung von textilen Flächengebilden gemäß Anspruch 1, **dadurch gekennzeichnet, dass** die Polymerisate auf Basis ethylenisch ungesättigter Monomere in Form von Emulgator stabilisierten, wässrigen Dispersionen vorliegen und erhältlich sind mittels radikalisch initiierter Emulsionspolymerisationsverfahren in Gegenwart von Emulgatoren und in Abwesenheit von Schutzkolloiden.

3. Verwendung von Bindemittel-Zusammensetzungen zur Herstellung von textilen Flächengebilden gemäß Anspruch 1 oder 2, **dadurch gekennzeichnet, dass** ein oder mehrere ethylenisch ungesättigte, Epoxy-Gruppen enthaltende Monomere a) ausgewählt werden aus der Gruppe umfassend 4-Hydroxybutylacrylatglycidylether, 4-Hydroxybutylmethacrylatglycidylether, Allylglycidylether, Glycidylmethacrylat und Glycidylacrylat.

4. Verwendung von Bindemittel-Zusammensetzungen zur Herstellung von textilen Flächengebilden gemäß Anspruch 1 bis 3, **dadurch gekennzeichnet, dass** ein oder mehrere Verbindungen der allgemeinen Formel R¹SiR₀₋₂(OR³)₁₋₃ als ethylenisch ungesättigte, Silan-Gruppen enthaltende Monomere b) ausgewählt werden,
wobei R² ein C₁- bis C₃-Alkylrest, C₁- bis C₃-Alkoxyrest oder Halogen ist, R¹ die Bedeutung CH₂=CR⁴-(CH₂)₀₋₁ oder CH₂=CR⁴CO₂)(CH₂)₁₋₃ mit R⁴ als Kohlenstoffrest mit 1 bis 10 C-Atomen hat, R³ ein unverzweigter oder verzweigter, gegebenenfalls substituierter Alkylrest mit 1 bis 12 C-Atomen ist.

5. Verwendung von Bindemittel-Zusammensetzungen zur Herstellung von textilen Flächengebilden gemäß Anspruch 1 bis 4, **dadurch gekennzeichnet, dass** ein oder mehrere ethylenisch ungesättigte, Silan-Gruppen enthaltende Monomere b) ausgewählt werden aus der Gruppe umfassend Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltris-(2-methoxyethoxy)silan, Allylvinyltrimethoxysilan, Allyltrimethoxysilan, Vinyldimethylmethoxysilan, Vinyldimethylethoxysilan, Vinylisobutyldimethoxysilan, Vinyltriisopropyloxysilan, Vinyltributoxysilan, Vinyltrihexyloxysilan, Vinylmethoxydihexyloxysilan, Vinyltrioctyloxysilan, vinyldimethoxyoctyloxysilan, Vinylmethoxydioctyloxysilan, Vinylmethoxydilauryloxysilan, Vinyldimethoxylauryloxysilan, γ-(Meth)Acryloxypropyltri(alkoxy)silane, α-Methacryloxymethyltri(alkoxy)silane, γ-Methacryloxypropylmethyl-di(alkoxy)silane, Vinylalkyldi(alkoxy)silane und Vinyltri(alkoxy)silane, wobei als Alkoxygruppen beispielsweise Methoxy-, Ethoxy-, Isopropoxy-, Methoxyethylen-, Ethoxyethylen-, Methoxypropylenglykolether- bzw. Ethoxypropylenglykolether-Reste eingesetzt werden können.

6. Verwendung von Bindemittel-Zusammensetzungen zur Herstellung von textilen Flächengebilden gemäß Anspruch 1 bis 5, **dadurch gekennzeichnet, dass** die Polymerisate in Form von wässrigen Dispersionen vorliegen.

7. Verwendung von Bindemittel-Zusammensetzungen zur Herstellung von textilen Flächengebilden gemäß Anspruch 1 bis 6, **dadurch gekennzeichnet, dass** die Fasern lose oder in Form von Bündeln oder gewebten Textilien, oder in Form von Garnen, Nonwovens, wie Vliesen, Gelegen oder Gewirken vorliegen.

8. Verwendung von Bindemittel-Zusammensetzungen zur Herstellung von textilen Flächengebilden gemäß Anspruch 1 bis 7, **dadurch gekennzeichnet, dass** die Polymerisate in einer Menge von 1 bis 50 Gew.-% eingesetzt werden, bezogen auf das Gesamtgewicht der Fasern.

9. Verwendung von Bindemittel-Zusammensetzungen zur Herstellung von textilen Flächengebilden gemäß Anspruch 1 bis 8, **dadurch gekennzeichnet, dass** der Anteil der Fasern 40 bis 99 Gew.-% beträgt, bezogen auf das Gesamtgewicht der textilen Flächengebilde.

## Claims

1. Use of binder compositions comprising one or more polymers based on ethylenically unsaturated monomers in the manufacture of textile sheet products, by fibers based on natural or synthetic, organic materials being contacted with one or more binder compositions and then optionally dried and/or cured, wherein the polymers are based on ethylenically unsaturated monomers consisting of
a) 0.1 to 10 wt% of one or more ethylenically unsaturated monomers comprising epoxy groups,
b) 0.1 to 10 wt% of one or more ethylenically unsaturated monomers comprising silane groups, and
c) one or more further ethylenically unsaturated monomers, other than said monomers a) and b), selected from the group consisting of vinyl esters, (meth)acrylic esters, vinylaromatics, olefins, 1,3-dienes and vinyl halides, and
optionally d) one or more further monomers selected from the group consisting of ethylenically unsaturated sulfonated monomers or their salts and ethylenically unsaturated carboxamides and
optionally 0.1 to 10 wt% of ancillary monomers selected from the group consisting of ethylenically unsaturated mono- and dicarboxylic acids, mono- and diesters of fumaric acid and maleic acid, monomers having hydroxyl or CO groups, diacetoneacrylamide and acetylacetoxyethyl acrylate or methacrylate,
wherein the particulars in wt% are each based on the total weight of the polymers.

2. Use of binder compositions in the manufacture of textile sheet products according to Claim 1, **characterized in that** the polymers based on ethylenically unsaturated monomers are in the form of emulsifier-stabilized aqueous dispersions and are obtainable via free-radically initiated emulsion polymerization processes in the presence of emulsifiers and in the absence of protective colloids.

3. Use of binder compositions in the manufacture of textile sheet products according to Claim 1 or 2, **characterized in that** one or more ethylenically unsaturated monomers a), comprising epoxy groups, are selected from the group comprising 4-hydroxybutyl acrylate glycidyl ether, 4-hydroxybutyl methacrylate glycidyl ether, allyl glycidyl ether, glycidyl methacrylate and glycidyl acrylate.

4. Use of binder compositions in the manufacture of textile sheet products according to Claim 1 or 2 or 3, **characterized in that** one or more compounds of the general formula R¹SiR²₀₋₂(OR³)₁₋₃ are selected as ethylenically unsaturated monomers b), comprising silane groups,
wherein R² is a C₁- to C₃-alkyl moiety, C₁- to C₃-alkoxy moiety or halogen, R¹ has the meaning CH₂=CR⁴-(CH₂)₀₋₁ or CH₂=CR⁴CO₂(CH₂)₁₋₃ with R⁴ as carbyl moiety of 1 to 10 carbon atoms, R³ is a branched or unbranched, substituted or unsubstituted alkyl moiety of 1 to 12 carbon atoms.

5. Use of binder compositions in the manufacture of textile sheet products according to Claim 1 or 2 or 3 or 4, **characterized in that** one or more ethylenically unsaturated monomers b), comprising silane groups, are selected from the group comprising vinyltrimethoxysilane, vinylmethyldimethoxysilane, vinyltriethoxysilane, vinylmethyldiethoxysilane, vinyltripropoxysilane, vinyltriisopropoxysilane, vinyltris(1-methoxy) isopropoxysilane, vinyltributoxysilane, 3-methacryloyloxypropyltrimethoxysilane, 3-methacryloyloxypropylmethyldimethoxysilane, methacryloyloxymethyltrimethoxysilane, 3-methacryloyloxypropyltris(2-methoxyethoxy)silane, vinyltris(2-methoxyethoxy)silane, allylvinyltrimethoxysilane, allyltrimethoxysilane, vinyldimethylmethoxysilane, vinyldimethylethoxysilane, vinylisobutyldimethoxysilane, vinyltriisopropyloxysilane, vinyltributoxysilane, vinyltrihexyloxysilane, vinylmethoxydihexyloxysilane, vinyltrioctyloxysilane, vinyldimethoxyoctyloxysilane, vinylmethoxydioctyloxysilane, vinylmethoxydilauryloxysilane, vinyldimethoxylauryloxysilane, γ-(meth)acryloyloxypropyltri(alkoxy)silanes, α-methacryloyloxymethyltri(alkoxy)silanes, γ-methacryloyloxypropylmethyldi(alkoxy)silanes, vinylalkyldi(alkoxy)silanes and vinyltri(alkoxy)silanes, where useful alkoxy groups include, for example, methoxy, ethoxy, isopropoxy, methoxyethylene, ethoxyethylene, methoxypropylene glycol ether and/or ethoxypropylene glycol ether moieties.

6. Use of binder compositions in the manufacture of textile sheet products according to Claim 1 or 2 or 3 or 4 or 5, **characterized in that** the polymers are in the form of aqueous dispersions.

7. Use of binder compositions in the manufacture of textile sheet products according to Claim 1 or 2 or 3 or 4 or 5 or 6, **characterized in that** the fibers are loose or in the form of bundles or woven textiles, or in the form of yarns, nonwovens, such as webs, non-crimp fabrics or knitted fabrics other than those formed by weft knitting with independently-movable needles.

8. Use of binder compositions in the manufacture of textile sheet products according to Claim 1 or 2 or 3 or 4 or 5 or 6 or 7, **characterized in that** the polymers are employed in an amount of 1 to 50 wt%, based on the total weight of the fibers.

9. Use of binder compositions in the manufacture of textile sheet products according to Claim 1 or 2 or 3 or 4 or 5 or 6 or 7 or 8, **characterized in that** the proportion of fibers is from 40 to 99 wt%, based on the total weight of the textile sheet products.

## Revendications

1. Utilisation de compositions de liant contenant un ou plusieurs polymères à base de monomères éthyléniquement insaturés pour la fabrication de structures planes textiles,
en ce que des fibres à base de matériaux organiques, naturels ou synthétiques, sont mises en contact avec une ou plusieurs compositions de liant et sont ensuite le cas échéant séchées et/ou durcies,
les polymères étant à base de monomères éthyléniquement insaturés constitués par
a) 0,1 à 10% en poids d'un ou de plusieurs monomères éthyléniquement insaturés, contenant des groupes époxy,
b) 0,1 à 10% en poids d'un ou de plusieurs monomères éthyléniquement insaturés, contenant des groupes silane et
c) un ou plusieurs autres monomères éthyléniquement insaturés, différents des monomères a) et b), choisis dans le groupe constitué par les esters de vinyle, les esters de l'acide (méth)acrylique, les aromatiques de vinyle, les oléfines, les 1,3-diènes et les halogénures de vinyle, et
le cas échéant d) un ou plusieurs autres monomères choisis dans le groupe constitué par les monomères éthyléniquement insaturés, contenant des groupes acide sulfonique ou leurs sels et des amides d'acides carboxyliques éthyléniquement insaturés et
le cas échéant 0,1 à 10% en poids de monomères auxiliaires choisis dans le groupe constitué par les acides monocarboxyliques et dicarboxyliques éthyléniquement insaturés, les monoesters et les diesters de l'acide fumarique et de l'acide maléique, les monomères présentant des groupes hydroxy ou CO, le diacétonacrylamide et l'acrylate ou le méthacrylate d'acétylacétoxyéthyle,
les indications en % en poids se rapportant à chaque fois au poids total des polymères.

2. Utilisation de compositions de liant pour la fabrication de structures planes textiles selon la revendication 1, **caractérisée en ce que** les polymères à base de monomères éthyléniquement insaturés se trouvent sous forme de dispersions aqueuses stabilisées par un émulsifiant et peuvent être obtenus par des procédés de polymérisation en émulsion initiée par voie radicalaire en présence d'émulsifiants et en l'absence de colloïdes de protection.

3. Utilisation de compositions de liant pour la fabrication de structures planes textiles selon la revendication 1 ou 2, **caractérisée en ce qu'**un ou plusieurs monomères a) éthyléniquement insaturés, contenant des groupes époxy, sont choisis dans le groupe comprenant l'éther d'acrylate de 4-hydroxybutyle et de glycidyle, l'éther de méthacrylate de 4-hydroxybutyle et de glycidyle, l'éther d'allyle et de glycidyle, le méthacrylate de glycidyle et l'acrylate de glycidyle.

4. Utilisation de compositions de liant pour la fabrication de structures planes textiles selon les revendications 1 à 3, **caractérisée en ce qu'**un ou plusieurs composés de formule générale R¹SiR²₀₋₂(OR³)₁₋₃ sont choisis comme monomères b) éthyléniquement insaturés contenant des groupes silane, R² représentant un radical C₁-C₃-alkyle, un radical C₁-C₃-alcoxy ou halogène, R¹ présentant la signification CH₂=CR⁴-(CH₂)₀₋₁ ou CH₂=CR⁴CO₂ (CH₂)₁₋₃ avec R⁴, en tant que radical hydrocarboné, comprenant 1 à 10 atomes de carbone, R³ représentant un radical alkyle non ramifié ou ramifié, le cas échéant substitué, comprenant 1 à 12 atomes de carbone.

5. Utilisation de compositions de liant pour la fabrication de structures planes textiles selon les revendications 1 à 4, **caractérisée en ce qu'**un ou plusieurs monomères b) éthyléniquement insaturés contenant des groupes silane sont choisis dans le groupe comprenant le vinyltriméthoxysilane, le vinylméthyldiméthoxysilane, le vinyltriéthoxysilane, le vinylméthyldiéthoxysilane, le vinyltripropoxysilane, le vinyltriisopropoxysilane, le vinyltris-(1-méthoxy)-isopropoxysilane, le vinyltributoxysilane, le 3-méthacryloxypropyltriméthoxysilane, le 3-méthacryloxypropylméthyldiméthoxysilane, le méthacryloxyméthyltriméthoxysilane, le 3-méthacryloxypropyltris(2-méthoxyéthoxy)silane, le vinyltris-(2-méthoxyéthoxy)silane, l'allylvinyltriméthoxysilane, l'allyltriméthoxysilane, le vinyldiméthylméthoxysilane, le vinyldiméthyléthoxysilane, le vinylisobutyldiméthoxysilane, le vinyltriisopropyloxysilane, le vinyltributoxysilane, le vinyltrihexyloxysilane, le vinylméthoxydihexyloxysilane, le vinyltrioctyloxysilane, le vinyldiméthoxyoctyloxysilane, le vinylméthoxydioctyloxysilane, le vinylméthoxydilauryloxysilane, le vinyldiméthoxylauryloxysilane, les γ-(méth)acryloxypropyltri(alcoxy)silanes, les α-méthacryloxyméthyltri(alcoxy)silanes, les γ-méthacryloxypropylméthyldi(alcoxy)silanes, les vinylalkyldi(alcoxy)silanes et les vinyltri(alcoxy)silanes, où on peut utiliser, comme groupes alcoxy, par exemple les radicaux méthoxy, éthoxy, isopropoxy, méthoxyéthylène, éthoxyéthylène, méthoxypropylèneglycoléther ou éthoxypropylèneglycoléther.

6. Utilisation de compositions de liant pour la fabrication de structures planes textiles selon les revendications 1 à 5, **caractérisée en ce que** les polymères se trouvent sous forme de dispersions aqueuses.

7. Utilisation de compositions de liant pour la fabrication de structures planes textiles selon les revendications 1 à 6, **caractérisée en ce que** les fibres se trouvent sous forme lâche ou sous forme de faisceaux ou de textiles tissés ou sous forme de fils, de Nonwovens, tels que des non-tissés, des mats ou des tricots.

8. Utilisation de compositions de liant pour la fabrication de structures planes textiles selon les revendications 1 à 7, **caractérisée en ce que** les polymères sont utilisés en une quantité de 1 à 50% en poids par rapport au poids total des fibres.

9. Utilisation de compositions de liant pour la fabrication de structures planes textiles selon les revendications 1 à 8, **caractérisée en ce que** la proportion de fibres est de 40 à 99% en poids par rapport au poids total de la structure plane textile.
